# EUROPÄISCHE PATENTSCHRIFT

(11) **EP 2 100 064 B1**
(45) Veröffentlichungstag und Bekanntmachung des Hinweises auf die Patenterteilung: **19.09.2012**
(21) Anmeldenummer: 08707827.5
(22) Anmeldetag: 04.01.2008
(51) Int. Cl.: F16K 31/50

(54) **VORRICHTUNG ZUR LINEAREN BEWEGUNG EINES VENTILGLIEDES**
DEVICE FOR THE LINEAR DISPLACEMENT OF A VALVE MEMBER
DISPOSITIF POUR LE DEPLACEMENT LINEAIRE D'UN OBTURATEUR DE SOUPAPE

(30) Priorität: 11.01.2007 DE 102007001741
(43) Veröffentlichungstag der Anmeldung: 16.09.2009
(73) Patentinhaber: Continental Automotive GmbH, 30165 Hannover (DE)
(72) Erfinder: HANNEWALD, Thomas, 64347 Griesheim (DE)
(86) Internationale Anmeldenummer: PCT/EP2008/050060
(87) Internationale Veröffentlichungsnummer: WO 2008/084012

(56) Entgegenhaltungen:
- DE-C- 647 981
- US-A- 1 658 445
- US-A- 2 370 604

## Beschreibung

Die Erfindung bezieht sich auf eine Vorrichtung zur linearen Bewegung eines Ventilgliedes. Die Erfindung bezieht sich ferner auf eine Verwendung der Vorrichtung. Ventilglieder sind bekannt. In der DE 103 27 271 A1 wird ein Ventilglied für eine Zusatzsteuerventileinrichtung beschrieben. Bei dem Ventilglied ist an einem Schaft ein hutförmiger Teller angeordnet, der zu der vom Einlassventil abgewandten Seite konvex mit einem Scheitelpunkt ausgebildet ist. Solche Ventilglieder werden in Richtung der Längsachse des Schaftes in Abhängigkeit vom Betriebszustand des Ventils linear bewegt. Dies erfolgt in der Regel über einen Spindelantrieb, wobei die Spindel und der Schaft des Ventilgliedes die selbe Längsachse aufweisen. Wirken während der Betriebsphase stärkere Kräfte auf das Ventilglied ein, so vergrößert sich die Last auf der Spindel erheblich, was zu deren Beschädigung führen kann. Darüber hinaus wirken dann auch höhere Kräfte auf die Muttern ein, die auf der Spindel aufgebracht sind, so dass auch diese Schädigungen davon tragen können.

Aus der US 2,370,604 ist eine Ventileinheit mit einem Ventilglied bekannt, bei der ein Ventilglied an einer Schubstange angeordnet ist. Mit der Schubstange sind jeweils zwei Paare von Gelenkhebel verbunden, wobei jedes Paar mit einer auf einer Spindel angeordnete Mutter verbunden ist. Die Gelenkhebel sind mittels Wälzlager in den Muttern gelagert, wobei die Wälzlager gleichzeitig in Verbindungsstreben geführt sind. Die Verbindungsstreben ihrerseits sind mit Zugstäben gesichert, welche eventuell auftretende Kräfte in das Ventilgehäuse umleiten.

Der Erfindung liegt daher die Aufgabe zu Grunde, eine Vorrichtung zur linearen Bewegung eines Ventilgliedes zu schaffen, die ohne Schäden auch dann funktionstüchtig bleibt, wenn auf das Ventilglied schlagartig höhere Kräfte einwirken.

Die der Erfindung zu Grunde liegende Aufgabe wird durch eine Vorrichtung zur linearen Vorrichtung eines Ventilgliedes gelöst, die aus einer senkrecht zur Bewegungsrichtung drehbar gelagerten Spindel besteht, die aus einem ersten Spindelteil und aus einem zweiten Spindelteil besteht, die jeweils gegenläufig zueinander ausgebildete Außengewinde aufweisen, bei der auf dem ersten Spindelteil eine erste Mutter mit komplementärem Innengewinde und auf dem zweiten Spindelteil eine zweite Mutter mit komplementärem Innengewinde aufweisen, wobei das andere Ende des ersten Verbindungssteges und das andere Ende des zweiten Verbindungssteges gemeinsam an einem dritten Lager senkrecht zur Drehachse der Spindel drehbar gelagert sind, das an dem Anschlag für das Ventilglied angeordnet ist, wobei die Bewegungsrichtung des Ventilgliedes, die Mitte des dritten Lagers und die Mitte der Spindel in der Seitenansicht immer auf einer Linie L liegen.

Der Erfindung liegt daher die Aufgabe zu Grunde, eine Vorrichtung zur linearen Bewegung eines Ventilgliedes zu schaffen, die ohne Schäden auch dann funktionstüchtig bleibt, wenn auf das Ventilglied schlagartig höhere Kräfte einwirken.

Erfindungsgemäß wird die Aufgabe dadurch gelöst, dass parallel zur Spindel, auf ihrer dem Ventilglied abgewandten Seite ein Anschlag für die erste Mutter und für die zweite Mutter angeordnet ist, deren Anschlagsfläche senkrecht zur Bewegungsrichtung des Ventilgliedes verläuft. Das Ventilglied wird in einem Ventil oder allgemein in einem Absperrorgan eingesetzt. Das erste Lager und das zweite Lager sind beispielsweise jeweils an der ersten Mutter und an der zweiten Mutter seitlich angeordnet. Bei dem ersten Verbindungssteg und dem zweiten Verbindungssteg handelt es sich beispielsweise um einen Flachstahl. Die Anordnung des anderen Endes des ersten Verbindungssteges und des anderen Endes des zweiten Verbindungssteges an einem dritten Lager erfolgt beispielsweise ebenfalls seitlich an dem Anschlag für das Ventilglied. Der Anschlag für die erste Mutter und für die zweite Mutter kann einteilig oder mehrteilig ausgeführt sein. Im Normalbetrieb besteht dabei zwischen der ersten Mutter und der zweiten Mutter einerseits und dem Anschlag für die erste Mutter und die zweite Mutter andererseits ein Abstand, der durch jeweils einen Spalt gebildet wird. Die Mitte der Spindel verbindet das erste Spindelteil mit dem zweiten Spindelteil.

Es hat sich in überraschender Weise gezeigt, dass die Vorrichtung zur linearen Bewegung eines Ventilgliedes auch dann keinerlei Schädigungen erfährt, wenn auf das Ventilglied schlagartig höhere Kräfte einwirken. Im Falle einer schlagartig höheren Einwirkung von Kräften auf das Ventilglied wird nämlich bewirkt, dass sich die Spindel geringfügig durchbiegt und die erste Mutter sowie die zweite Mutter dann direkt am Anschlag für die erste Mutter und für die zweite Mutter anliegen. Die über das Ventilglied dann in die Vorrichtung eingebrachte höhere Stoßkraft wird somit direkt im Anschlag für die erste Mutter und für die zweite Mutter aufgefangen, so dass Schädigungen an der Spindel oder an der ersten Mutter oder an der zweiten Mutter vermieden werden können. Um die entsprechende Durchbiegung der Spindel zu gewährleisten, wird diese bezüglich ihrer Dimensionierung ingenieurmäßig ausgelegt. Dabei wird je nach dem Einsatzgebiet von der maximalen Stoßkraft ausgegangen, die im Betrieb auf das Ventilglied einwirken kann.

Nach einer bevorzugten Ausgestaltung der Erfindung ist vorgesehen, dass der Anschlag für das Ventilglied auf seiner dem Ventilglied abgewandten Seite an einem Federelement anliegt, dessen Federkraft in Richtung der linearen Bewegung des Ventilgliedes zum Schließen oder Öffnen des Ventils auf den Anschlag wirkt. Als Federelement kommt Dabei beispielsweise ein Druckfedersystem zum Einsatz. Dabei ist vorteilhaft, dass durch die Wirkung des Federelements das jeweilige Spiel in den Lagern sowie in den Muttern erfolgreich kompensiert wird, was zusätzlich dazu beiträgt, dass schlagartige Krafteinwirkungen auf das Ventilglied zu keinerlei Schädigungen innerhalb der Vorrichtung führen.

Gemäß einer weiteren bevorzugten Ausgestaltung der Erfindung ist die Spindel im Bereich ihrer Enden jeweils an einem ersten Spindellager und an einem zweiten Spindellager drehbar gelagert. Das erste Spindellager und das zweite Spindellager können dabei konstruktiv so ausgebildet sein, dass sie gleichzeitig als Anschläge für die erste Mutter oder die zweite Mutter bei geöffnetem Ventil dienen. Dadurch wird die Spindel vorteilhaft fixiert und die Stabilität der Vorrichtung erhöht.

Eine weitere bevorzugte Ausgestaltung der Erfindung sieht vor, dass die Mitte der Spindel einen größeren Außendurchmesser aufweist als der erste Spindelteil und der zweite Spindelteil. Dabei ist vorteilhaft, dass die Mitte der Spindel dann als Anschlag für die erste Mutter und die zweite Mutter im geschlossenen Zustand des Ventils dienen kann, was zusätzlich die Stabilität der Vorrichtung verbessert.

Gegenstand der Erfindung ist schließlich die Verwendung der erfindungsgemäßen Vorrichtung in Tellerventilen mit Hydrauliköl in Kraftfahrzeugen. Auf diese Weise können Schwingungen des Verbrennungsmotors drehzahlabhängig in vorteilhafter Weise gedämpft werden. Das Ventilglied kann somit auch dann bedenkenlos in eine lineare Bewegung versetzt werden, wenn das Kraftfahrzeug beispielsweise durch ein Schlagloch fährt, was in der Regel dazu führt, dass größere Stoßkräfte auf das Ventilglied einwirken. Auch in solchen Fällen können Beschädigungen an der Vorrichtung erfolgreich vermieden werden.

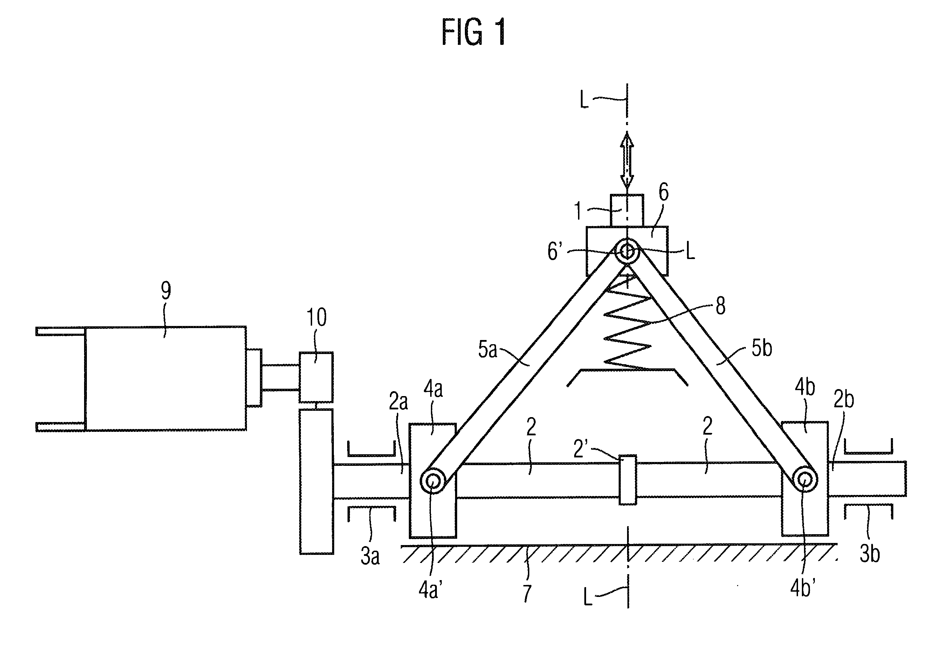

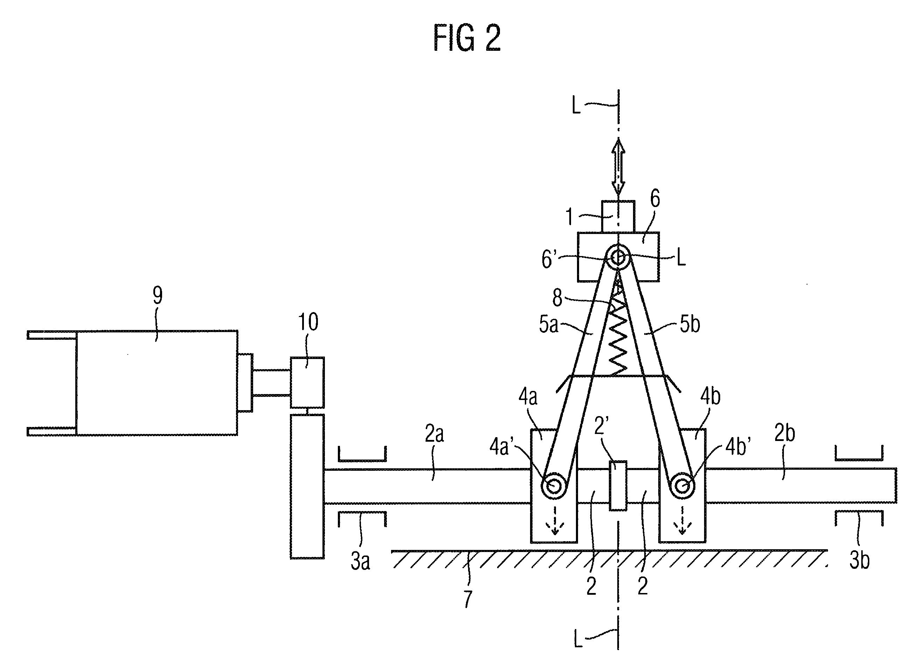

Die Erfindung wird nachfolgend anhand der Zeichnung (Fig. 1, Fig. 2) näher und beispielhaft erläutert:
- Fig. 1: zeigt die Vorrichtung zur linearen Bewegung des Ventilgliedes in der Seitenansicht im geöffneten Zustand des Ventils;
- Fig. 2: zeigt die Vorrichtung zur linearen Bewegung des Ventilgliedes in der Seitenansicht im geschlossenen Zustand des Ventils.

In Fig. 1 ist die Vorrichtung zur linearen Bewegung eines Ventilgliedes 1 in der Seitenansicht dargestellt. Dabei ist das Ventilglied 1 nur schematisch dargestellt. Die Vorrichtung besteht aus einer senkrecht zur Bewegungsrichtung drehbar gelagerten Spindel 2, die aus einem ersten Spindelteil 2a und einem zweiten Spindelteil 2b besteht. Das erste Spindelteil 2a und das zweite Spindelteil 2b weisen jeweils gegenläufig zueinander ausgebildete Außengewinde auf. Auf dem ersten Spindelteil 2a ist eine erste Mutter 4a mit komplementärem Innengewinde, und auf dem zweiten Spindelteil 2b ist eine zweite Mutter 4b mit komplementärem Innengewinde aufgebracht. Die erste Mutter 4a weist ein erstes Lager 4a' für die drehbare Lagerung des einen Endes eines ersten Verbindungssteges 5a senkrecht zur Drehachse der Spindel 2 auf. Die zweite Mutter 4b weist ein zweites Lager 4b' für die drehbare Lagerung des einen Endes eines zweiten Verbindungssteges 5b senkrecht zur Drehachse der Spindel 2 auf. Das andere Ende des ersten Verbindungssteges 5a und das andere Ende des zweiten Verbindungssteges 5b sind gemeinsam an einem dritten Lager 6' senkrecht zur Drehachse der Spindel 2 drehbar gelagert. Das dritte Lager 6' ist dabei an dem Anschlag 6 für das Ventilglied 1 angeordnet. Die Bewegungsrichtung des Ventilgliedes, dargestellt durch den Äquivalenzpfeil, die Mitte des dritten Lagers 6' und die Mitte 2' der Spindel 2 liegen in der Seiteansicht immer auf einer Line L. Die Mitte 2' der Spindel 2 verbindet das erste Spindelteil 2a mit dem zweiten Spindelteil 2b. Parallel zur Spindel 2 ist auf ihrer, dem Ventilglied 1 abgewandten Seite ein Anschlag 7 für die erste Mutter 4a und die zweite Mutter 4b angeordnet, deren Anschlagfläche senkrecht zur Bewegungsrichtung des Ventilgliedes 1 verläuft. Der Anschlag 6 für das Ventilglied 1 liegt auf seiner dem Ventilglied 1 abgewandten Seite an einem Federelement 8 an, das als Druckfedersystem ausgebildet ist. Die Federkraft des Federelements 8 wirkt in Richtung der linearen Bewegung des Ventilgliedes zum Schließen des Ventils auf den Anschlag 6 und verhindert durch die jeweilige Unterbindung des Spiels zwischen den einzelnen Teilen der Vorrichtung ein Klappern innerhalb der Vorrichtung während des Betriebs. Die Spindel 2 ist im Bereich ihrer Enden jeweils an einem ersten Spindellager 3a und an einem zweiten Spindellager 3b drehbar gelagert. Die Mitte 2' der Spindel 2 weist einen größeren Außendurchmesser auf als der erste Spindelteil 2a und der zweite Spindelteil 2b. Die Mitte 2 kann somit als Anschlag für die erste Mutter 4a und die zweite Mutter 4b wirken. Ausgehend von dem in Fig. 1 dargestellten geöffneten Zustand des Ventils wird die Spindel 2 über einen Elektromotor 9 und ein nachgeschaltetes Getriebe 10 in eine entsprechende Drehbewegung versetzt. In Folge der gegenläufig zueinander ausgebildeten Außengewinde auf dem ersten Spindelteil 2a beziehungsweise auf dem zweiten Spindelteil 2b werden dadurch die erste Mutter 4a und die zweite Mutter 4b auf der Spindel 2 in Richtung der Mitte 2' bewegt, was dazu führt, dass das Ventilglied 1 linear von der Spindel 2 weg bewegt wird. Dieser Vorgang wird solange fortgesetzt, bis der gewünschte geschlossene Zustand des Ventils erreicht ist.

In Fig. 2 ist die Vorrichtung zur linearen Bewegung des Ventilgliedes 1 im geschlossenen Zustand des Ventils in der Seitenansicht dargestellt. Bei der in Fig. 2 dargestellten Ausführungsform liegen die erste Mutter 4a und die zweite Mutter 4b im geschlossenen Zustand des Ventils (nicht dargestellt) nicht an der Mitte 2' der Spindel 2 an. Wirken in dem nunmehr geschlossenen Zustand des Ventils schlagartig größere Kräfte auf das Ventilglied 1 ein, so führt dies zu einer Rückbewegung des Ventilgliedes 1 in Richtung auf die Spindel 2. Sind die dabei auftretenden Stoßkräfte groß genug, so führt dies zwangsläufig zu einer geringfügigen Durchbiegung der Spindel 2. Beim Einsatz der Vorrichtung in Tellerventilen mit Hydrauliköl in Kraftfahrzeugen sind dabei beispielsweise Durchbiegungen von 0,2 mm realisiert worden. Eine solche geringfügige Durchbiegung der Spindel 2 führt dazu, dass die erste Mutter 4a und die zweite Mutter 4b zum Anschlag 7 für die erste Mutter 4a und für die zweite Mutter 4b hingedrückt werden, was durch die gestrichelten Pfeile verdeutlicht wird. Sobald die erste Mutter 4a und die zweite Mutter 4b am Anschlag 7 für die erste Mutter 4 und für die zweite Mutter 4b anliegen (nicht dargestellt) werden die Stoßkräfte in den Anschlag 7 für die erste Mutter 4a und die zweite Mutter 4b eingebracht und können dann die einzelnen Teile der Vorrichtung zur linearen Bewegung eines Ventilglieds 1 nicht mehr schädigen, wie dies beispielsweise dann der Fall wäre, wenn die Stoßkräfte von einer Spindel aufgefangen werden müsste, die zur linearen Bewegung des Ventilgliedes eingesetzt würde wobei deren Längsachse mit der Längsachse des Schaftes des Ventilgliedes identisch wäre (nicht dargestellt).

## Patentansprüche

1. Vorrichtung zur linearen Bewegung eines Ventilgliedes (1), die aus einer senkrecht zur Bewegungsrichtung drehbar gelagerten Spindel (2) besteht, die aus einem ersten Spindelteil (2a) und aus einem zweiten Spindelteil (2b) besteht, die jeweils gegenläufig zueinander ausgebildete Außengewinde aufweisen, bei der auf dem ersten Spindelteil (2a) eine erste Mutter (4a) mit komplementärem Innengewinde und auf dem zweiten Spindelteil (2b) eine zweite Mutter (4b) mit komplementärem Innengewinde aufgebracht sind, bei der die erste Mutter (4a) ein erstes Lager (4a') für die drehbare Lagerung des einen Endes eines ersten Verbindungssteges (5a) senkrecht zur Drehachse der Spindel (2) und die zweite Mutter (4b) ein zweites Lager (4b') für die drehbare Lagerung des einen Endes eines zweiten Verbindungssteges (5b) senkrecht zur Drehachse der Spindel (2) aufweisen, wobei das andere Ende des ersten Verbindungssteges (5a) und das andere Ende des zweiten Verbindungssteges (5b) gemeinsam an einem dritten Lager (6') senkrecht zur Drehachse der Spindel (2) drehbar gelagert sind, das an dem Anschlag (6) für das Ventilglied (1) angeordnet ist, wobei die Bewegungsrichtung des Ventilgliedes (1), die Mitte des dritten Lagers (6') und die Mitte (2') der Spindel (2) in der Seitenansicht immer auf einer Linie L liegen und bei der parallel zur Spindel (2), auf ihrer, dem Ventilglied (1) abgewandten Seite ein Anschlag (7) für die erste Mutter (4a) und für die zweite Mutter (4b) angeordnet ist, deren Anschlagfläche senkrecht zur Bewegungsrichtung des Ventilgliedes (1) verläuft.

2. Vorrichtung nach Anspruch 1, bei der der Anschlag (6) für das Ventilglied (1) auf seiner dem Ventilglied (1) abgewandten Seite an einem Federelement (8) anliegt, dessen Federkraft in Richtung der linearen Bewegung des Ventilgliedes (1) zum Schließen oder Öffnen des Ventils auf den Anschlag (6) wirkt.

3. Vorrichtung nach Anspruch 1 oder Anspruch 2, bei der die Spindel (2) im Bereich ihrer Enden jeweils an einem ersten Spindellager (3a) und an einem zweiten Spindellager (3b) drehbar gelagert ist.

4. Vorrichtung nach einem der Ansprüche 1 bis 3, bei der die Mitte (2') der Spindel (2) einen größeren Außendurchmesser aufweist als der erste Spindelteil (2a) und der zweite Spindelteil (2b).

5. Verwendung der Vorrichtung nach einem der vorhergehenden Ansprüche zur linearen Bewegung von Ventilgliedern (1) in Tellerventilen mit Hydraulikölen in Kraftfahrzeugen.

## Claims

1. Device for the linear displacement of a valve member (1) which consists of a spindle (2) rotatably mounted perpendicularly to the direction of displacement which consists of a first spindle part (2a) and of a second spindle part (2b) which in each case have external threads designed contradirectionally to one another, in which a first nut (4a) with a complementary internal thread is attached on the first spindle part (2a) and a second nut (4b) with a complementary internal thread is attached on the second spindle part (2b), in which the first nut (4a) has a first bearing (4a') for the rotatable mounting of one end of a first connecting web (5a) perpendicularly to the axis of rotation of the spindle (2) and the second nut (4b) has a second bearing (4b') for the rotatable mounting of one end of a second connecting web (5b) perpendicularly to the axis of rotation of the spindle (2), the other end of the first connecting web (5a) and the other end of the second connecting web (5b) being rotatably mounted jointly perpendicularly to the axis of rotation of the spindle (2) on a third bearing (6') which is arranged on the stop (6) for the valve member (1), the direction of displacement of the valve member (1), the middle of the third bearing (6') and the middle (2') of the spindle (2) always lying on a line L in the side view, and in which, on the side of the spindle (2) which faces away from the valve member (1), a stop (7) for the first nut (4a) and for the second nut (4b) is arranged parallel to said spindle, the stop face of which stop runs perpendicularly to the direction of displacement of the valve member (1).

2. Device according to Claim 1, in which the stop (6) for the valve member (1) bears, on its side facing away from the valve member (1), against a spring element (8), the spring force of which acts on the stop (6) in the direction of the linear displacement of the valve member (1) in order to close or open the valve.

3. Device according to Claim 1 or Claim 2, in which the spindle (2) is rotatably mounted in the region of its ends in each case on a first spindle bearing (3a) and on a second spindle bearing (3b).

4. Device according to one of Claims 1 to 3, in which the middle (2') of the spindle (2) has a larger outside diameter than the first spindle part (2a) and the second spindle part (2b).

5. Use of the device according to one of the preceding claims, for the linear displacement of valve members (1) in disk valves with hydraulic oils in motor vehicles.

## Revendications

1. Dispositif de déplacement linéaire d'un élément (1) de soupape, qui est constitué d'une broche (2) montée tournante perpendiculairement à la direction de déplacement, broche qui est constituée d'une première partie (2a) de broche et d'une deuxième partie (2b) de broche, qui ont des filetages extérieurs de sens opposés l'un à l'autre, dans lequel il est appliqué sur la première partie (2a) de broche un premier écrou (4a) ayant un taraudage complémentaire et sur la deuxième partie (2b) de broche un deuxième écrou (4b) ayant un taraudage complémentaire, dans lequel le premier écrou (4a) a un premier palier (4a') pour le montage tournant de l'une des extrémités d'une première barre (5a) de liaison perpendiculairement à l'axe de rotation de la broche (2) et le deuxième écrou (4b) a un deuxième palier (4b') pour le montage tournant de l'une des extrémités d'une deuxième barre (5b) de liaison perpendiculairement à l'axe de rotation de la broche (2), l'autre extrémité de la première barre (5a) de liaison et l'autre extrémité de la deuxième barre (5b) de liaison étant montées conjointement tournantes perpendiculairement à l'axe de rotation de la broche (2) conjointement sur un troisième palier (6') qui est disposé sur la butée (6) pour l'élément (1) de soupape, la direction de déplacement de l'élément (1) de soupape, le milieu du milieu du troisième palier (6') et le milieu (2') de la broche (2) s'étendant, dans la vue de côté, toujours sur une ligne L et dans lequel parallèlement à la broche (2), de son côté éloigné de l'élément (1) de soupape, est disposée une butée (7) pour le premier écrou (4) et pour le deuxième écrou (4b), butée dont la surface s'étend perpendiculairement à la direction de déplacement de l'élément (1) de soupape.

2. Dispositif suivant la revendication 1, dans lequel la butée (6) pour l'élément (1) de soupape s'applique, sur son côté éloigné de l'élément (1) de soupape, à un élément (8) de ressort, dont la force de ressort agit sur la butée (6) dans la direction du mouvement linéaire de l'élément (1) de soupape pour fermer ou pour ouvrir la soupape.

3. Dispositif suivant la revendication 1 ou revendication 2, dans lequel la broche (2) est montée tournante dans la zone de ses extrémités respectivement sur un premier palier (3a) de broche et sur un deuxième palier (3b) de broche.

4. Dispositif suivant l'une des revendications 1 à 5, dans lequel le milieu (2') de la broche (2) a un diamètre extérieur plus grand que la première partie (2a) de la broche et que la deuxième partie (2b) de la broche.

5. Utilisation du dispositif suivant l'une des revendications précédentes pour le déplacement linéaire d'éléments (1) de soupape dans des soupapes à champignon à huile hydraulique dans des véhicules automobiles.
